(19) Europäisches Patentamt
European Patent Office
Office européen des brevets

(11) **EP 1 947 841 A2**

(12) **EUROPEAN PATENT APPLICATION**

(43) Date of publication:
**23.07.2008 Bulletin 2008/30**

(51) Int Cl.:
**H04N 5/232** *(2006.01)*

(21) Application number: **08100327.9**

(22) Date of filing: **10.01.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK**<br><br>(30) Priority: **16.01.2007 JP 2007007074** | (71) Applicant: **Sony Corporation**<br>**Tokyo 108-0075 (JP)**<br><br>(72) Inventor: **Shinichi, Fujii**<br>**Tokyo 108-0075 (JP)**<br><br>(74) Representative: **Körber, Martin Hans et al**<br>**Mitscherlich & Partner**<br>**Sonnenstrasse 33**<br>**80331 München (DE)** |

(54) **Image pickup system, image pickup apparatus, and interchangeable lens**

(57)     An image pickup system includes an interchangeable lens and an image pickup apparatus on which the interchangeable lens is mounted. The image pickup apparatus includes an image pickup unit for generating image signals, a focus information obtaining unit for obtaining pieces of focus detection information generated on the basis of the image signals, and a focus time determining unit for determining a focus time when the focus lens has passed a focus position. The interchangeable lens includes a lens position detector for successively detecting positions of the focus lens, a storing unit for storing pieces of lens position history information in chronological order, and a focus position determining unit for determining a position of the focus lens at the focus time as the focus position on the basis of the pieces of lens position history information stored in chronological order in the storing unit.

FIG. 5

EP 1 947 841 A2

**Description**

CROSS REFERENCES TO RELATED APPLICATIONS

The present invention contains subject matter related to Japanese Patent Application JP 2007-007074 filed in the Japanese Patent Office on January 16, 2007, the entire contents of which are incorporated herein by reference.

BACKGROUND OF THE INVENTION

1. Field of the Invention

The present invention relates to an image pickup apparatus having an interchangeable lens.

2. Description of the Related Art

In general, digital still cameras having interchangeable lenses have been used, and in such a digital still camera, an interchangeable lens and a camera body communicate (transmit) with each other to obtain information about the other side.

Japanese Unexamined Patent Application Publication No. 2003-295047 discloses a digital camera having an interchangeable lens in which information about a position of a focus lens detected by a focus position detector disposed in the interchangeable lens is transmitted to a camera control circuit included in a camera body through a lens control circuit included in the interchangeable lens.

SUMMARY OF THE INVENTION

However, in a digital camera disclosed in Japanese Unexamined Patent Application Publication No. 2003-295047, since position information of a focus lens is transmitted from an interchangeable lens to a camera body by communication between the interchangeable lens and the camera body, the camera body may not obtain the position information of the focus lens in real time. Therefore, the camera body may not obtain the position information of the focus lens in real time when an AF evaluation value used for focus detection using a contrast detection system (contrast AF system) is calculated. This leads to a failure when the contrast AF operation is performed.

Accordingly, it is desirable to provide a technique of an image pickup apparatus capable of appropriately performing a contrast AF operation even when a detector used to detect a position of a focus lens is included in an interchangeable lens.

According to an embodiment of the present invention, there is provided an image pickup system including an interchangeable lens having a focus lens driven using a predetermined lens driving unit, and an image pickup apparatus on which the interchangeable lens is mounted. The image pickup apparatus includes: (a-1) an image pickup unit configured to generate image signals on the basis of a light image of a subject which has passed through the interchangeable lens; (a-2) a focus information obtaining unit configured to obtain pieces of focus detection information generated on the basis of the image signals successively generated using the image pickup unit when a focus detection operation using a contrast detection system is performed; and (a-3) a focus time determining unit configured to determine a focus time when the focus lens has passed a focus position on the basis of the pieces of focus detection information obtained in accordance with the image signals using the focus information obtaining unit and pieces of time information about time points when the image signals are generated using the image pickup unit. The interchangeable lens includes: (b-1) a lens position detector configured to successively detect positions of the focus lens driven using the predetermined lens driving unit when the focus detection operation using a contrast detection system is performed; (b-2) a storing unit configured to store pieces of lens position history information in chronological order generated by associating pieces of history information about the positions of the focus lens detected using the lens position detector with pieces of time information about time points when the focus lens has passed the positions; and (b-3) a focus position determining unit configured to determine a position of the focus lens at the focus time as the focus position on the basis of the pieces of lens position history information stored in chronological order in the storing unit.

According to another embodiment of the present invention, there is provided an image pickup apparatus to which an interchangeable lens having a focus lens driven using a predetermine lens driving unit is attachable, the image pickup apparatus including: (a) an image pickup unit configured to generate image signals on the basis of a light image of a subject which has passed through the interchangeable lens; (b) a focus information obtaining unit configured to obtain pieces of focus detection information generated on the basis of the image signals successively generated using the image pickup unit when a focus detection operation using a contrast detection system is performed; and (c) a focus time determining unit configured to determine a focus time when the focus lens has passed a focus position on the basis of the pieces of focus detection information obtained in accordance with the image signals using the focus information obtaining unit and pieces of time information about time points when the image signals are generated using the image pickup unit. The interchangeable lens includes a lens position detector configured to successively detect positions of the focus lens driven using the predetermined lens driving unit when the focus detection operation using a contrast detection system is performed, a storing unit configured to store pieces of lens position history information in chronological order generated by associating pieces of history information about the positions of the focus lens detected using the lens position detector with pieces of time information about time points when the focus lens has passed the positions, and a focus position determining unit configured to determine a position of the focus lens at the focus time as the focus position on the basis of the pieces of lens position history information stored in chronological order in the storing unit.

According to a further embodiment of the present invention, there is provided an interchangeable lens which has a focus lens driven using a predetermine lens driving unit and which is attachable to an image pickup apparatus, the interchangeable lens including: (a) a lens position detector configured to successively detect positions of the focus lens driven using the predetermined lens driving unit when a focus detection operation using a contrast detection system is performed; (b) a storing unit configured to store pieces of lens position history information in chronological order generated by associating pieces of history information about the positions of the focus lens detected using the lens position detector with pieces of time information about time points when the focus lens has passed the positions; and (c) a focus position determining unit configured to determine a position of the focus lens at the focus time as the focus position on the basis of the pieces of lens position history information stored in chronological order in the storing unit. The image pickup apparatus includes an image pickup unit configured to generate image signals on the basis of a light image of a subject which has passed through the interchangeable lens, a focus information obtaining unit configured to obtain pieces of focus detection information generated on the basis of the image signals successively generated using the image pickup unit when the focus detection operation using a contrast detection system is performed, and a focus time determining unit configured to determine a focus time when the focus lens has passed a focus position on the basis of the pieces of focus detection information obtained in accordance with the image signals using the focus information obtaining unit and pieces of time information about time points when the image signals are generated using the image pickup unit.

As described above, the focus time when the focus lens has passed the focus position is determined on the basis of the pieces of focus detection information obtained in accordance with the image signals successively generated using the image pickup unit when the focus detection operation using a contrast detection system is performed and the pieces of time information about the times when the image signals are generated using the image pickup unit. Furthermore, the position (focus position) of the focus lens at the focus time is determined on the basis of the pieces of lens position history information obtained by associating the pieces of history information about the positions of the focus lens driven when the focus detection operation using a contrast detection system is performed with the pieces of time information about the time points in which the focus lens has passed the positions. By this, even when a detector used to detect a position of the focus lens is included in the interchangeable lens, an appropriate contrast AF operation is performed.

BRIEF DESCRIPTION OF THE DRAWINGS

Fig. 1 is a diagram illustrating an external configuration of a camera system viewed from a front side according to an embodiment of the present invention;
Fig. 2 is a diagram illustrating an external configuration of the camera system viewed from a back side according to the embodiment of the present invention;
Fig. 3 is a vertical sectional view of the camera system;
Fig. 4 is a diagram used to describe a phase difference AF;
Fig. 5 is a block diagram illustrating an electrical configuration of the entire camera system;
Fig. 6 is a diagram used to describe a contrast AF operation;
Fig. 7 is a table used to describe pieces of lens position history information stored in a memory of an interchangeable lens in chronological order;
Fig. 8 is a graph used to describe the contrast AF operation of the camera system; and
Fig. 9 is a flowchart illustrating a basic operation of the camera system.

DESCRIPTION OF THE PREFERRED EMBODIMENTS

External Configuration of Camera System

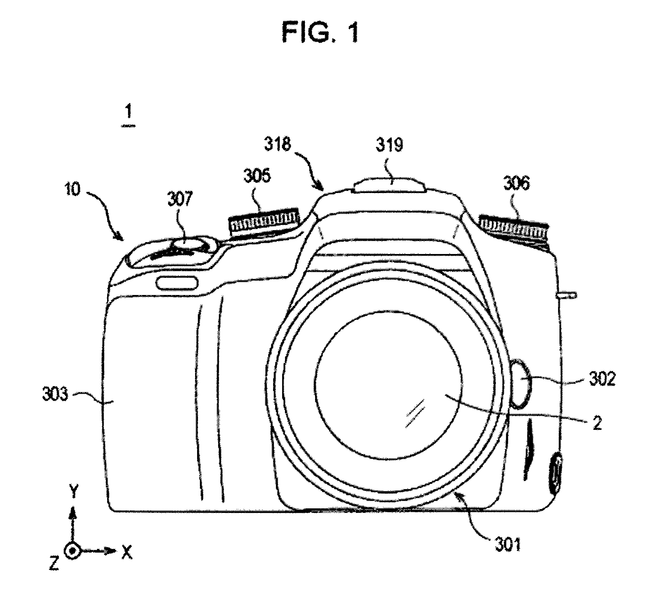

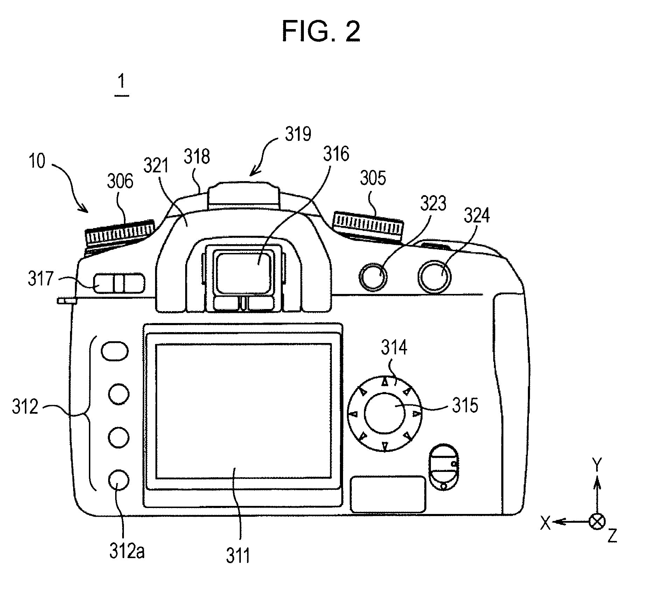

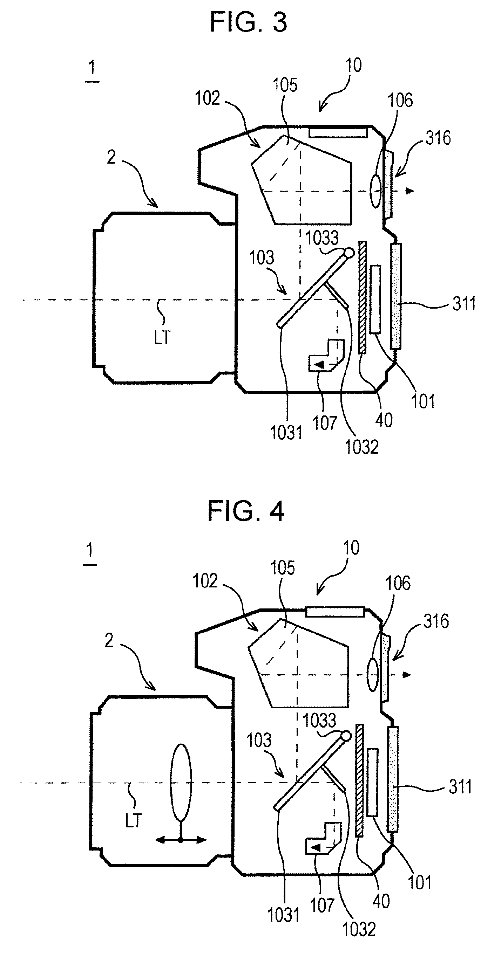

Figs. 1 and 2 are diagrams illustrating external configurations of a camera system 1 according to an embodiment of the present invention. Fig. 1 shows a front view and Fig. 2 shows a back view of the camera system 1. Fig. 3 is a vertical sectional view of the camera system 1.

The camera system 1 serves as an image pickup system configured as a single-lens reflex digital still camera, and includes a camera body 10 serving as an image pickup apparatus and an interchangeable lens 2 serving as an image pickup lens detachable from the camera body 10.

As shown in Fig. 1, the camera body 10 includes, on a front side thereof, a mount portion 301, a lens interchanging button 302, a grip portion 303, a mode setting dial 305, a control value setting dial 306, and a shutter button 307. The mount unit 301 has the interchangeable lens 2 disposed substantially the front center portion thereof. The lens interchanging button 302 is disposed on the right side of the mount portion 301. The grip portion 303 is disposed on the front left end portion (a left side in an X direction) of the camera body 10 in a protruding manner so that a user securely grips the camera body 10 with one hand (or with both hands). The mode setting dial 305 is disposed on a front upper left portion (an upper left in the Y direction) of the camera body 10. The control value setting dial 306 is disposed on a front upper right portion of the camera body 10. The shutter button 307 is disposed on an upper surface of the grip portion 303.

As shown in Fig. 2, the camera body 10 includes, on a back side thereof, an LCD (Liquid Crystal Display) 311, a setting button group 312, an arrow key 314, and a push button 315. The setting button group 312 is disposed to the left of the LCD 311. The arrow key 314 is disposed to the right of the LCD 311. The push button 315 is disposed in the center of the arrow key 314. Furthermore, the camera body 10 includes, on the back side thereof, an EVF (Electronic View Finder) 316, an eyecup 321, a main switch 317, an exposure correction button 323, an AE (auto-exposure) lock button 324, a flash unit 318, and a connection terminal portion 319. The EVF 316 is disposed on an upper side of the LCD 311 and is surrounded by the eyecup 321. The main switch 317 is disposed on a left side of the EVF 316. The exposure correction button 323 and the AE lock button 324 are disposed on a right side of the EVF 316. The flash unit 318 and the connection terminal portion 319 are disposed on an upper side of the EVF 316.

The mount portion 301 includes a plurality of electric contacts used to electrically connect the mount portion 301 to the interchangeable lens 2 mounted thereon, and a plurality of couplers used to mechanically connect the mount portion 301 to the interchangeable lens 2.

When the lens interchanging button 302 is pressed, the interchangeable lens 2 is detached from the mount portion 301.

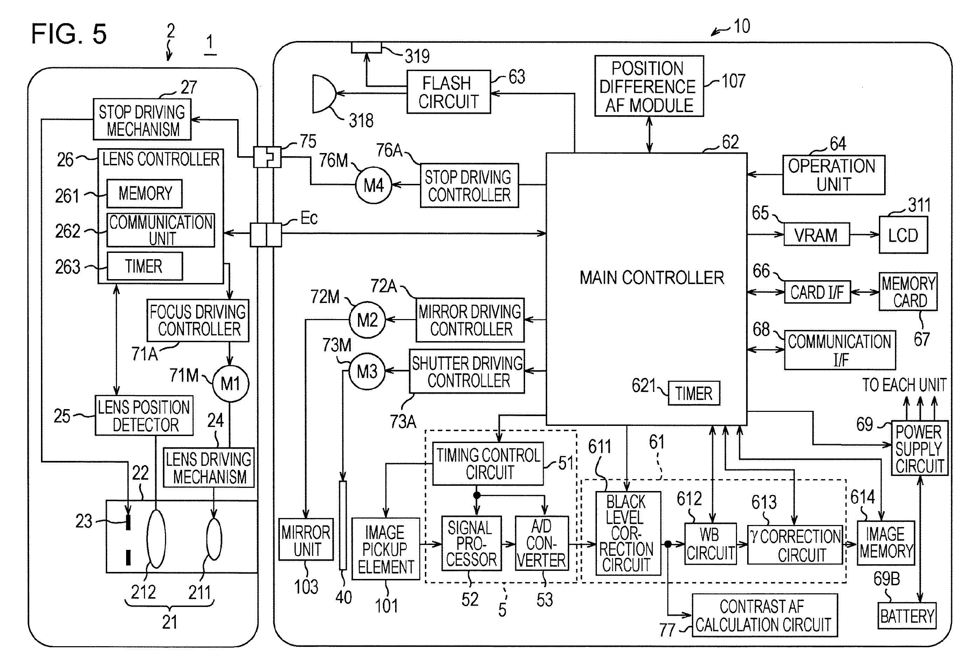

The grip portion 303 has an uneven surface formed so as to fit user's fingers so that the user securely grips the camera system 1 when capturing an image. Note that the grip portion 303 stores therein a battery chamber and a card chamber (not shown). In the battery chamber, a battery 69B (refer to Fig. 5) is stored as a power supply source for the camera system 1. In the card chamber, a recording medium (a memory card, for example) is stored so as to record image data representing a captured image. The recording medium is removable. Note that, in the grip portion 303, a grip sensor used to detect whether the user grips the grip portion 303 may be disposed.

Each of the mode setting dial 305 and the control value setting dial 306 is constituted by a substantially disc-shaped material which rotates in a plane substantially parallel with an upper surface of the camera body 10. The mode setting dial 305 is used to select one of various shooting modes and a reproducing mode. The various imaging modes include an auto-exposure (AE) control mode, an auto-focus (AF) control mode, a still image shooting mode used to shoot a still image, and a continuous shooting mode used to continuously shoot an image. The reproducing mode is used to reproduce a stored image. The control value setting dial 306 is used to set control values for various functions of the camera system 1.

The shutter button 307 allows an operation of "halfway pressing" in which the shutter button 307 is pressed halfway and an operation of "full pressing" in which the shutter button 307 is fully pressed. In the still image shooting mode, when the shutter button 307 is pressed halfway (S1), a preparation operation for shooting a still image of a subject (such as an operation of setting exposure control value and a focus control operation) is performed. In the still image shooting mode, when the shutter button 307 is fully pressed (S2), a shooting operation (a series of operations, that is, an operation of exposing an imaging sensor, an operation of performing a predetermined image processing on an image signal obtained by the exposure operation, and an operation of recording an image obtained from the image signal in the memory card for example) is performed.

The LCD 311 includes a liquid crystal panel capable of displaying color images, and displays images captured using an image pickup device 101 (shown in Fig. 3) and recorded images. Furthermore, the LCD 311 displays a screen used to set the functions and the modes of the camera system 1. Note that an organic EL (electroluminescence) display or a plasma display may be employed instead of the LCD 311.

The setting button group 312 is used to operate the various functions of the camera system 1. The setting button group 312 includes a selection confirming switch used to confirm an entry selected using a menu screen displayed on the LCD 311, a selection cancelling switch, a menu display switch used to change items displayed on the menu screen, a display on/off switch, and a display enlargement switch. The setting button group 312 further includes a button 312a used to set a live view mode (hereinafter referred to as an "LV mode setting button 312a").

The arrow key 314 is constituted by a ring-like member having a plurality of pressing portions (portions having triangle marks shown in Fig. 2) arranged with a predetermined intervals in a circumference direction. A plurality of contacts (switches, not shown) provided so as to correspond to the pressing portions detect pressing operations performed using the pressing portions. The push button 315 is disposed in the center of the arrow key 314. The arrow key 314 and the push button 315 are used to input an instruction for changing a scale factor when an image is captured (by moving a zoom lens in a wide direction or in a tele direction), an instruction for performing a frame-by-frame advance operation when recorded images are reproduced using the LCD 311, and an instruction for setting shooting conditions (a stop value, a shutter speed, and use of flash light).

The EVF (optical finder) 316 optically displays a region of the subject to be shot. Specifically, an image of the subject is introduced through the interchangeable lens 2 into the optical finder 316. Accordingly, the user views the subject to be shot using the image pickup device 101 through the optical finder 316.

The main switch 317 is a slide switch which has two contacts and which slides in a horizontal direction. When the main switch 317 is positioned in a left end of a region which allows the main switch 317 to slide, the camera system 1 is turned on whereas when the main switch 317 is positioned in a right end of the region which allows the main switch 317 to slide, the camera system 1 is turned off.

The flash unit 318 is a pop-up flash unit incorporated in the camera body 10. An external flash unit, for example, may be attached to the camera body 10 using the connection terminal portion 319.

The eyecup 321 is a U-shaped light-shield member which has a light-shielding function and which prevents external light from entering into the optical finder 316.

The exposure correction button 323 is used to manually control an exposure value (the stop value and the shatter speed). The AE lock button 324 is used to fix the exposure.

The interchangeable lens 2 functions as a lens window which receives light (a light image) emitted from the subject and functions as an image pickup optical system which introduces the light emitted from the subject into the image pickup device 101 included in the camera body 10. The interchangeable lens 2 is detachable from the camera body 10 by pressing the lens interchanging button 302.

The interchangeable lens 2 has a lens group 21 (shown in Fig. 5) including a plurality of lenses aligned along an optical axis LT. The lens group 21 includes a focus lens 211 (shown in Fig. 5) which is used to perform focus control by moving along the optical axis LT and a zoom lens 212 (shown in Fig. 5) which is used to change a scale factor by moving along the optical axis LT. Furthermore, the interchangeable lens 2 has an operation ring which is arranged and rotates along an outer circumference of a camera cone. The zoom lens 212 moves along the optical axis LT in accordance with a direction of rotation and an amount of rotation of the operation ring so as to set a zoom magnification (shooting magnification) in accordance with a position where the zoom lens 212 moves to.

Internal Configuration of Camera System 1

An internal configuration of the camera system 1 will now be described. Fig. 3 is a vertical sectional view of the camera system 1. As shown in Fig. 3, the camera body 10 includes the image pickup device 101, a finder unit (finder optical system) 102, a mirror unit 103, and an AF phase difference module 107.

The image pickup device 101 is arranged on the optical axis LT of the lens group 21 included in the interchangeable lens 2 mounted on the camera body 10 so as to be perpendicular to the optical axis LT. As the image pickup device 101, a plurality of pixels including photodiodes are arranged in a matrix, for example. Each of the plurality of pixels has a light-receiving surface having a CMOS color area sensor (CMOS image pickup device) including color filters for three color components, i.e., R (red), G (green), and B (blue) components which have different spectral characteristics. The color filters are arranged in accordance with a Bayer arraignment so as to attain a ratio of color filters for R, G, and B of 1:2:1, for example. The image pickup device (image pickup sensor) 101 generates analog electric signals (image signals) corresponding to the R, G, and B components of the light image of the subject formed using the interchangeable lens 2, and outputs the analog electric signals as the image signals corresponding to the R, G, and B components.

The mirror unit 103 is arranged on the optical axis LT so as to reflect the light emitted from the subject toward the finder unit 102. The light which was emitted from the subject and which passed through the interchangeable lens 2 is reflected using the mirror unit 103 (a main mirror 1031 which will be described later) upward. Part of the light which was emitted from the subject and which passed through the interchangeable lens 2 further passes through the mirror unit 103.

The finder unit 102 includes a pentaprism 105, an eyepiece 106, and the optical finder 316. The pentaprism 105 has a pentagon shape in a sectional view, and generates an erecting image of the light image of the subject entering from an lower surface of the pentaprism 105 by turning the light image upside down and by performing left-right reversal on the light image making use of reflection of the light of the subject in the pentaprism 105. The eyepiece 106 guides the erecting image of the light image of the subject outside of the optical finder 316. With this configuration, the finder unit 102 functions as an optical finder used to check a field at a time of waiting a shooting operation.

The mirror unit 103 includes the main mirror 1031 and a sub mirror 1032. The sub mirror 1032 is disposed to rotate on a back surface of the main mirror 1031 so as to be tilted toward the back surface of the main mirror 1031. Part of the light emitted from the subject which passed through the main mirror 1031 is reflected using the sub mirror 1032, and the reflected right is incident in the AF phase difference module 107.

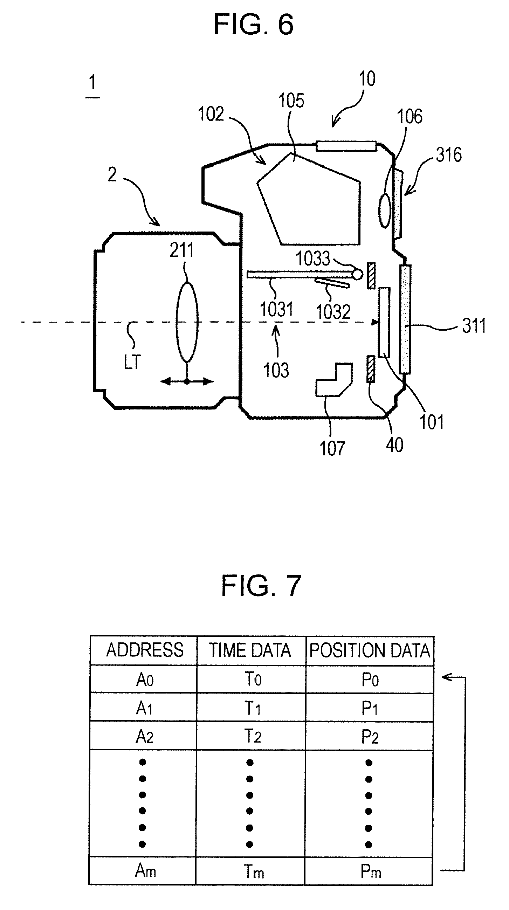

The mirror unit 103 is a so-called quick return mirror which has a pivot shaft 1033 as a supporting point and which pivots upward at a time of exposure and at a time of setting to the live view mode. When the mirror unit 103 is positioned beneath the pentaprism 105, the sub mirror 1032 is folded toward the main mirror 1031 so as to be arranged substantially in parallel to the main mirror 1031 (refer to Fig. 6). Accordingly, the light which was emitted from the subject and which passed through the interchangeable lens 2 reaches the image pickup device 101 without being blocked by the mirror unit 103 to thereby expose the image pickup device 101. When an image pickup operation is thus terminated using the image pickup device 101, the mirror unit 103 returns to an original position (a position shown in Fig. 3).

The AF phase difference module 107 is a so-called AF sensor including a range-finding element, for example, used to detect focus information of the subject. The AF phase difference module 107 is disposed under the mirror unit 103 and is used to detect a focus position by performing a focus detection utilizing a phase difference detection system (hereinafter referred to as "phase difference AF"). Specifically, when the user checks the subject through the optical finder 316, the light emitted from the subject is introduced into the AF phase difference module 107 while the main mirror 1031 and the sub mirror 1032 are in a down position thereof as shown in Fig. 4. In addition, the focus lens 211 included in the interchangeable lens 2 is driven to perform a focus operation in accordance with an output signal from the AF phase difference module 107.

A shutter unit 40 is disposed in front of the image pickup device 101 in an optical axis direction. The shutter unit 40 includes a curtain which moves in a vertical direction, and serves as a mechanical focal-plane shutter which performs a light-path opening operation and a light-path blocking operation for the light of the subject to be introduced into the image pickup device 101 along the optical axis LT. Note that the shutter unit 40 may be omitted if the image pickup device 101 is capable of fully performing an electronic shutter operation. Electrical Configuration of the Camera System 1

Fig. 5 is a block diagram illustrating an electrical configuration of the entire camera system 1. The same reference numerals are used for components similar to those shown in Figs. 1 to 3. For convenience of illustration, an electrical configuration of the interchangeable lens 2 will be described first.

The interchangeable lens 2 includes a lens driving mechanism 24, a lens position detector 25, a lens controller 26, and a stop driving mechanism 27, in addition to the lens group 21 constituting the image pickup optical system described above.

The lens group 21 includes, in addition to the focus lens 211 and the zoom lens 212, a stop 23 used to control an amount of light to be incident into the image pickup device 101 included in the camera body 10. The focus lens 211, the zoom lens 212, and the stop 23 are arranged in a direction of the optical axis LT in the camera cone so as to receive the light image of the subject and form an image in the image pickup device 101. The focus control operation is performed by driving the lens group 21 in the direction of the optical axis LT using an AF actuator 71M included in the interchangeable lens 2.

A focus driving controller 71A generates a driving control signal to be supplied to the AF actuator 71M in accordance with an AF control signal supplied from a main controller 62 through the lens controller 26. The driving control signal is used to move the focus lens 211 to the focus position. The AF actuator 71M is a stepping motor, for example, and supplies a lens driving force to the lens driving mechanism 24.

The lens driving mechanism 24 is constituted by, for example, a helicoide and a gear (not shown) which rotates the helicoide, and rotates the focus lens 211, for example, in a direction parallel to the optical axis LT utilizing the driving force supplied from the AF actuator 71M. Note that a direction and an amount of movement of the focus lens 211 are determined in accordance with a direction and the number of rotation of the AF actuator 71M, respectively.

The lens position detector 25 includes an encode plate and an encoder brush, and detects an amount of movement of the lens group 21 at a time of the focus control operation. The encode plate has a plurality of code patterns arranged in the direction of the optical axis LT in predetermined pitches in a moving range of the lens group 21. The encoder brush moves integrally with the camera cone 22 and slidably contacts with the encode plate. Note that a lens position detected using the lens driving mechanism 24 is output so as to be represented by the number of pulses.

The lens controller 26 is a micro computer which includes a memory 261 such as a ROM (Read-Only Memory) which stores a control program, for example, and a flash memory which stores data representing status information. The lens controller 26 further includes a timer 263 serving as a timekeeper operating on the basis of a reference clock.

The lens controller 26 further includes a communication unit 262 which communicates through a connector Ec with the main controller 62 included in the camera body 10. The communication unit 262 transmits to the main controller 62 state data of the lens group 21, such as a focal length, a position of an exit pupil, a stop value, a focusing distance, and an amount of peripheral light, and the position information of the focus lens 211 detected using the lens position detector 25. Meanwhile, the lens controller 26 receives data representing a driving amount of the focus lens 211, for example, from the main controller 62. When an image is captured, the communication unit 262 transmits data such as information about the focal length and the stop value obtained after completion of an AF operation to the main controller 62. Note that the memory 261 stores therein the state data of the lens group 21 and data representing the driving amount of the focus lens 211, for example, transmitted from the main controller 62.

The stop driving mechanism 27 receives a driving force from a stop driving actuator 76M through the coupler 75 so as to change a diameter of the stop 23.

Next, an electrical configuration of the camera body 10 will be described. The camera body 10 includes, in addition to the image pickup device 101 and the shutter unit 40 described above, an AFE (Analog Front End) 5, an image processor 61, an image memory 614, the main controller 62, a flash circuit 63, an operation unit 64, a VRAM 65 (65a and 65b), a card I/F 66, a memory card 67, a communication I/F 68, a power supply circuit 69, the battery 69B, a mirror driving controller 72A, a mirror driving actuator 72M, a shutter driving controller 73A, a shutter driving actuator 73M, a stop driving controller 76A, and the stop driving actuator 76M.

As described above, the image pickup device 101 includes CMOS color area sensors. A timing control circuit 51 controls image pickup operations such as start (and end) of an exposure operation of the image pickup device 101, selection of pixels which are to be used to output signals and which are included in the image pickup device 101, and reading of pixel signals.

The AFE 5 supplies a timing pulse to the image pickup device 101 so that the image pickup device 101 performs a predetermined operation. Furthermore, the AFE 5 performs predetermined signal processing on the image signals (analog signals received using the pixels in the CMOS color area sensors) output from the image pickup device 101 so as to convert the image signals into digital signals to be output to the image processor 61. The AFE 5 includes the timing control circuit 51, a signal processor 52, and an A/D converter 53, for example.

The timing control circuit 51 generates a predetermined timing pulse (a pulse which generates a vertical scanning pulse $\varphi Vn$, a horizontal scanning pulse $\varphi Vm$, and a reset signal $\varphi Vr$, for example) in accordance with the reference clock output from the main controller 62 and outputs the timing pulse to the image pickup device 101 so as to control the image pickup operation of the image pickup device 101. Furthermore, the timing control circuit 51 supplies the predetermined timing pulse to the signal processor 52 and the A/D converter 53 to thereby control operations of the signal processor 52 and the A/D converter 53.

The signal processor 52 performs predetermined analog signal processing on the analog image signals output from the image pickup device 101. The signal processor 52 includes a CDS (Correlation Double Sampling) circuit, an AGC (Auto Gain Control) circuit, and a clamp circuit. The A/D converter 53 converts the analog image signals corresponding to R, G, and B component output from the signal processor 52 into digital image signals, each of which has a plurality of bits (12 bits, for example), in accordance with the timing pulse output from the timing control circuit 51.

The image processor 61 performs predetermined signal processing on the image data output from the AFE 5 so as to generate an image file. The image processor 61 includes a black level correction circuit 611, a white balance control circuit 612, and a gamma correction circuit 613. The image data supplied to the image processor 61 is temporarily written to the image memory 614 in synchronization with a reading operation performed using the image pickup device 101. Thereafter, the circuits included in the image processor 61 access the image data written to the image memory 614 and perform corresponding operations.

The black level correction circuit 611 corrects black levels of the image signals corresponding to the R, G, and B components which are converted using the A/D converter 53 so as to obtain image signals having standard black levels.

The white balance control circuit 612 converts levels of the digital signals corresponding to the R, B, and B components on the basis of a level of white obtained as a reference in accordance with a light source (a white balance (WB) control). Specifically, in accordance with WB control data supplied from the main controller 62, the white balance control circuit 612 determines portions of an image which are assumed to correspond to white portions of the subject on the basis of brightness and color saturation data of the subject. Furthermore, the white balance control circuit 612 obtains an average level of each of the R, G, and B components and a G/R ratio and a G/B ratio in each of the portions, and performs level correction using the average level, the G/R ratio, and the G/B ratio as correction gains for the R and B components.

The gamma correction circuit 613 corrects a gradation characteristic of the image data subjected to the WB control. Specifically, the gamma correction circuit 613 performs nonlinear conversion on the levels of the color components of the image data using a gamma correction table which is set in advance, and further performs offset control.

The image memory 614 temporarily stores therein the image data output from the image processor 61 in the shooting modes, and is used as a work space when the main controller 62 performs predetermined processing on the image data. In the reproducing mode, the image memory 614 temporarily stores therein the image data read from the memory card 67.

The main controller 62 is a microcomputer including a storage unit such as a ROM which stores a control program therein and a flash memory which temporarily stores data therein, and controls operations of the units included in the camera system 1. The main controller 62 includes a timer 621 serving as a timekeeper operating on the basis of a reference clock.

The camera system 1 has the live view mode as a function of performing a live view display (preview display) on the LCD 311 so that the subject is displayed as a moving image in accordance with the image signals which are successively generated in the image pickup device 101. The user checks an image of the subject captured using the image pickup device 101 on the LCD 311 before actual shooting (shooting for storing an image) is performed. When the LV mode setting button 312a is pressed, the live view mode is set and the live view display is started under control of the main controller 62.

In the live view mode, since the light emitted from the subject should be introduced into the image pickup device 101, the shutter unit 40 is opened as shown in Fig. 6 and the main mirror 1031 and the sub mirror 1032 move upward. Accordingly, since the AF phase difference module 107 does not receive the light emitted from the subject, as the focus detection (AF) in the live view mode, instead of the phase difference AF described above, focus detection employing a contrast detection system (contrast AF) in which the focus lens 211 is driven to be moved to the focus position in accordance with a signal output from the image pickup device 101 is performed (which will be described later).

The flash circuit 63 controls an amount of light emitted from the flash unit 318 or an amount of light emitted from an external flash unit connected to the connection terminal portion 319 to meet a predetermined amount of light which is set using the main controller 62.

The operation unit 64 includes the mode setting dial 305, the control value setting dial 306, the shutter button 307, the setting button group 312, the arrow key 314, the push button 315, and the main switch 317 which are described above, and is used to input operation information to the main controller 62.

The VRAM 65 has a memory capacity capable of storing image signals corresponding to the number of pixels included in the LCD 311, and serves as a buffer memory arranged between the main controller 62 and the LCD 311. The card I/F 66 is used for transmission and reception of signals performed between the memory card 67 and the main controller 62. The memory card 67 is a recording medium storing the image data generated using the main controller 62 therein. The communication I/F 68 is used to transmit the image data to an external apparatus such as a personal computer.

The power supply circuit 69 is a constant-voltage circuit, for example, which generates a voltage (5V, for example) for driving the controllers including the main controller 62, the image pickup device 101, and the various driving units, that is, the entire camera system 1. Note that the image pickup device 101 is controlled to be activated in accordance with a control signal supplied from the main controller 62 to the power supply circuit 69. The battery 69B is a primary battery such as an alkaline battery, or a secondary battery such as a nickel hydride battery, and is a power supply source which supplies electric power to the entire camera system 1.

The mirror driving controller 72A generates a driving signal used to drive the mirror driving actuator 72M when the shooting operation is performed. The mirror driving actuator 72M drives the mirror unit (quick return mirror) 103 so that the mirror unit 103 turns to a horizontal position or a tilting position.

The shutter driving controller 73A generates a driving control signal to be supplied to the shutter driving actuator 73M in accordance with a control signal supplied from the main controller 62. The shutter driving actuator 73M drives the shutter unit 40 so that the shutter unit 40 is opened or closed.

The stop driving controller 76A generates a driving control signal to be supplied to the stop driving actuator 76M in accordance with a control signal supplied from the main controller 62. The stop driving actuator 76M supplies a driving force through a coupler 75 to the stop driving mechanism 27.

The camera body 10 further includes a contrast AF calculation circuit 77 which calculates a contrast AF evaluation value, which is used when the contrast AF is performed, in accordance with the image data which has been output from the black level correction circuit 611 and which has been subjected to black level correction processing.

The contrast AF of the camera system 1 which is performed utilizing the contrast AF calculation circuit 77 will be described in detail. Contrast AF of the Camera System 1

In the camera system 1, which is a digital camera having an interchangeable lens, the position information of the focus lens 211 detected using the lens position detector 25 is transmitted to the camera body 10 through the communication unit 262 included in the lens controller 26 of the interchangeable lens 2. Therefore, in the camera body 10, the position information of the focus lens 211 necessary for the contrast AF is difficult to obtain in real time.

Accordingly, in the camera system 1 of this embodiment, a plurality of pieces of position information of the focus lens 211 are not successively obtained in real time, but only position information of the focus lens 211 at a time when the subject is brought into focus (hereinafter referred to as a "focus time") using time information (clock time information) is obtained. Specifically, in the interchangeable lens 2, pieces of lens position history information are stored in the memory 261 included in the lens controller 26 in chronological order. Each of the pieces of lens position history information is generated by associating history information about each of a plurality of positions of the focus lens 211 detected using the lens position detector 25 while the focus lens 211 is driven at a time of contrast AF with time information about a timing (time) when the focus lens 211 passed each of the plurality of positions. On the other hand, in the camera body 10, after the focus time is determined by calculating the AF evaluation value, position information of the focus lens 211 at focus time is obtained from the interchangeable lens 2 which stores therein the pieces of lens position history information in chronological order. The contrast AF will be described in detail hereinafter.

In the contrast AF of this embodiment, the pieces of lens position history information are stored in the memory 261 included in the lens controller 26 of the interchangeable lens 2 in chronological order. Specifically, as shown in Fig. 7, in portions having addresses of A0 to Am in the memory 261, pieces of data (time data) T0 to Tm representing times (for example, times elapsed after the lens controller 26 of the interchangeable lens 2 is activated) obtained using the timer 263 included in the lens controller 26 and pieces of data (position data) P0 to Pm representing positions of the focus lens 211 corresponding to times of T0 to Tm are stored. When the contrast AF is started, the pieces of time data and the pieces of position data are successively stored in the portions having the address of A0 to Am in the memory 261. When the portion having the address of Am is reached, the next one of the pieces of time data and the next one of the pieces of position data are stored in the portion having the address of A0 again. Since the pieces of time data and the pieces of position data are stored in the memory 261 like a ring memory, a storage capacity to be assigned to the memory 261 may be reduced and the pieces of time data and the pieces of position data around focus time of the focus lens 211 may be reliably stored. As the storage capacity, a capacity capable of storing pieces of time data and pieces of position data for 100 ms is assigned to the memory 261, for example. As the pieces of position data, pieces of position information obtained by detecting the positions of the focus lens 211 detected in every cycle corresponding to a cycle (240 fps) in which the image pickup device 101 generates an image signal while the contrast AF is performed are stored. Accordingly, time axes of the camera body 10 and the interchangeable lens 2 have the same resolutions, and therefore, a balanced focus position of the focus lens 211 is obtained.

In the contrast AF of this embodiment, in the camera body 10, a pixel group in an AF area defined in a portion (a center portion, for example) of a region to be captured is read, and an AF evaluation value is calculated. The AF evaluation value is calculated as a total of absolute values of differences between adjacent pixels in the AF area.

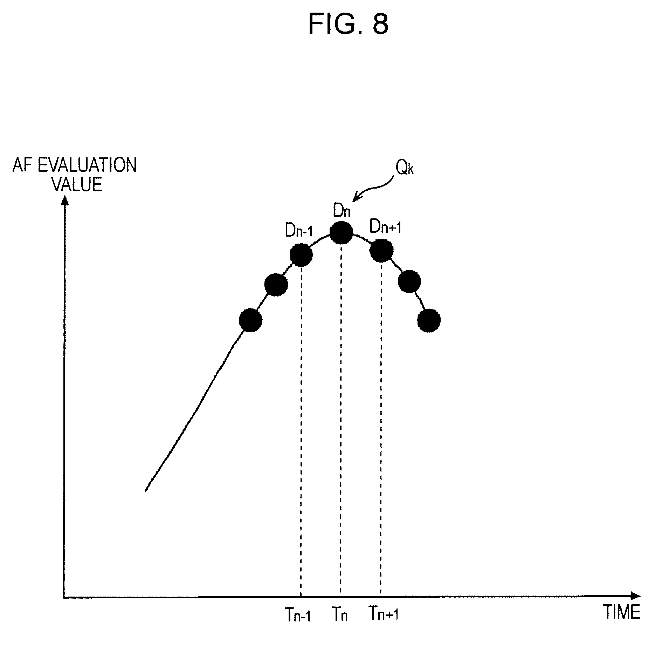

When the AF evaluation value is successively calculated while the focus lens 211 is moved in a fixed direction at a constant speed, for example, the relationship between time and the AF evaluation value in which the AF evaluation value monotonically increases first and then monotonically decreases when a peak Qk is reached as shown in Fig. 8 is obtained. The time represented by the axis of abscissa shown in Fig. 8 is measured using the timer 621 included in the main controller 62 of the camera body 10 (for example, a time elapsed after the main switch 317 is turned on). Note that the focus lens 211 moves till a peak of focus, that is, the peak Qk of the AF evaluation value is reached and passed.

As shown in Fig. 8, AF evaluation values $D_{n-1}$, $D_n$, and $D_{n+1}$ in the vicinity of the peak Qk and times $T_{n-1}$, $T_n$, and $T_{n+1}$ when image signals used to calculate the AF evaluation values are generated using the image pickup device 101, for example, are obtained, and a focus time Tf when the AF evaluation value reaches the peak Qk is obtained using a secondary interpolation approximation formula shown as a formula (1) below.

$$Pf = \frac{D_{n-1}(T_{n+1}{}^2 - T_n{}^2) + D_n(T_{n-1}{}^2 - T_{n+1}{}^2) + D_{n+1}(T_n{}^2 - T_{n-1}{}^2)}{2\{D_{n-1}(T_{n+1} - T_n) + D_n(T_{n-1} - T_{n+1}) + D_{n+1}(T_n - T_{n-1})\}} \quad \cdots (1)$$

The camera body 10 transmits information about a time difference between the focus time Tf calculated in the camera body 10 and a current time to the interchangeable lens 2. In accordance with the information about a time difference, the interchangeable lens 2 determines a position of the focus lens 211 as the focus position at focus time Tf on the basis of the pieces of lens position history information stored in the memory 261 as shown in Fig. 7. Then, information about the determined focus position is transmitted from the interchangeable lens 2 to the main controller 62 included in the camera body 10 to thereby drive-control the focus lens 211 to move to the focus position. Note that since the pieces of lens position history information stored in the memory 261 in chronological order includes the pieces of time data and the pieces of position data obtained in a constant cycle (1/240 seconds), in a case where time data at the focus time Tf does not exist, the position of the focus lens 211 is determined by performing calculation using two pieces of time data immediately before and after the focus time Tf and corresponding two pieces of position data on a pro-rata basis.

In the contrast AF (hill-climbing AF) described above, since the AF evaluation value is obtained using the contrast AF calculation circuit 77 and the focus lens 211 is moved using the focus driving controller 71A to the focus position corresponding to the focus time Tf obtained using formula (1), an auto focus control with high focus accuracy is attained by the phase difference AF using the AF phase difference module 107.

Operation of the camera system 1 performing such contrast AF will be described in detail hereinafter. Operation of Camera System 1

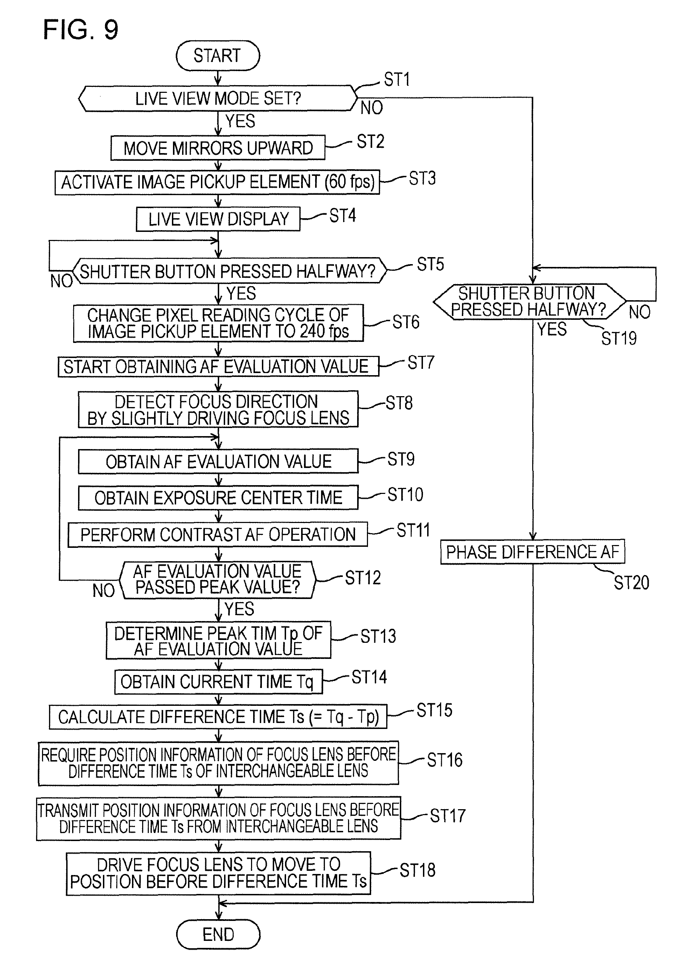

Fig. 9 is a flowchart illustrating a basic operation of the camera system 1, and particularly illustrating an AF operation. The operation is performed using the main controller 62 and the lens controller 26.

First, it is determined whether the user has pressed the LV mode setting button 312a in order to set the live view mode in step ST1. When the determination is affirmative, the process proceeds to step ST2 whereas when the determination is negative, the process proceeds to step ST19.

In step ST2, the mirror driving actuator 72M drives the main mirror 1031 and the sub mirror 1032 to move upward as shown in Fig. 6.

In step ST3, the image pickup device 101 is activated and pixels are read. Here, the pixels in the image pickup device 101 are read in a cycle of 60 fps.

In step ST4, the LCD 311 performs live view display in accordance with image signals successively output from the image pickup device 101 every 60 fps.

In step ST5, it is determined whether the user has pressed the shutter button 307 halfway (S1). When the determination is affirmative, the process proceeds to step ST6 whereas when the determination is negative, the process returns to step ST5.

In step ST6, the cycle of reading of the pixels in the image pickup device 101 is changed to a cycle of 240 fps. Since the pixels are read every 240 fps, a driving pitch of the focus lens 211 becomes twice to four times a depth of field (depth of focus), that is, a substantially appropriate driving pitch, when taking a driving speed of the lens group 21 included in the interchangeable lens 2 into consideration.

In step ST7, in accordance with outputs from the pixel group in the AF area in the image pickup device 101, an operation of obtaining the AF evaluation value by calculation using the contrast AF calculation circuit 77 is started.

In step ST8, the focus lens 211 is slightly moved to detect a focus direction. Specifically, the focus lens 211 is slightly moved by a distance one to two times the depth of field in a direction toward a proximal side (or a distal side), AF evaluation values before and after the focus lens 211 is slightly moved are obtained, and one of the directions which has a larger AF evaluation value is determined as a direction (focus direction) in which the focus position is located. Thereafter, the focus lens 211 is moved in the focus direction at a constant speed, for example. Note that the focus lens 211 is moved in the focus direction until it is determined that the AF evaluation value passed the peak in step ST12.

In step ST9, in accordance with the outputs from the pixel group in the AF area in the image pickup device 101, the contrast AF calculation circuit 77 calculates and obtains an AF evaluation value in a cycle of 240 fps. That is, an AF evaluation value (focus detection information) is obtained in accordance with the image signals successively generated using the image pickup device 101 at the time of the contrast AF operation.

In step ST10, a time (exposure center time) corresponding to a center time of a charging time (exposure time) of the image signals used for the calculation of the AF evaluation value in step ST9 is obtained using the timer 621 included in the main controller 62.

As operations corresponding to steps ST9 and ST10, in the interchangeable lens 2, positions of the focus lens 211 which is driven using the AF actuator 71M and the lens driving mechanism 24 are successively detected using the lens position detector 25 at the time of the contrast AF operation, and pieces of lens position history information (refer to Fig. 7) are stored in the memory 261 included in the lens controller 26 in chronological order. Each of the pieces of lens position history information is generated by associating history information about the corresponding position of the focus lens 211 with time information about timing (time) when the focus lens 211 passed the corresponding position.

In step ST11, in accordance with the AF evaluation value obtained in step ST9, the contrast AF (hill-climbing AF) operation is performed.

In step ST12, it is determined whether the AF evaluation value has passed the peak Qk (shown in Fig. 8). That is, it is determined whether the AF evaluation value obtained in step ST9 is smaller than an AF evaluation value obtained last time. When it is determined that the AF evaluation value has passed the peak Qk, the process proceeds to step ST13 whereas when it is determined that the AF evaluation value has not yet passed the peak Qk, the process returns to step ST9.

In step ST13, in accordance with the AF evaluation value obtained in step ST9 and the exposure center time obtained in step ST10, a time (focus time) Tp when the AF evaluation value reaches the peak Qk is determined using formula (1) shown above. That is, on the basis of the AF evaluation value (focus detection information) which is obtained in accordance with the image signals supplied from the image pickup device 101 and which is obtained in step ST9 and time information about a time when the image signals are generated in the image pickup device 101, the focus time when the focus lens 211 reached the focus position is determined.

In step ST14, a current time Tq is obtained using the timer 621 included in the main controller 62 in the camera body 10.s

In step ST15, a difference time Ts (= Tq - Tp) which is a time difference between the current time (current time point) Tq obtained in step ST14 and the focus time (focus time point) Tp is calculated.

In step ST16, the camera body 10 transmits a request command requesting the interchangeable lens 2 to provide information about a position (focus position) of the focus lens 211 where the focus lens 211 was positioned at a time the difference time Ts before, the difference time being calculated in step ST15.

In step ST17, in response to the request command transmitted from the camera body 10 in step ST16, the interchangeable lens 2 transmits the information about the position (information about the focus position) of the focus lens 211 where the focus lens 211 was positioned at a time the difference time Ts before is reached to the camera body 10. Specifically, the lens controller 26 included in the interchangeable lens 2 determines the position (the focus position) of the focus lens 211 at a time point going back from the current time by a period of time corresponding to the difference time Ts, in accordance with the pieces of lens position history information (refer to Fig. 7) stored in the memory 261 in chronological order, and transmits the information about the focus position to the camera body 10. In this way, the camera body 10 obtains the information about the focus position of the focus lens 211 accurately determined in the interchangeable lens 2.

Note that when the focus position is determined in step ST17, a position of the focus lens 211 corresponding to a time point going back from the current time by a period of time obtained by adding a time required for transmission of the request command, that is, a time required for transmission of a signal from the camera body 10 to the interchangeable lens 2 to the difference time Ts is preferably determined as the focus position. Accordingly, the focus position of the focus lens 211 is more accurately determined using the interchangeable lens 2.

In step ST18, the focus lens 211 is moved to the position (focus position) where the focus lens 211 was positioned at a time the difference time Ts before, the position being obtained in step ST17. Here, the main controller 62 drives the AF actuator 71M through the lens controller 26 and the focus driving controller 71A whereby the focus lens 211 is moved to the focus position. Thus, the contrast AF operation is terminated.

In step ST19, as with step ST5, it is determined whether the user pressed the shutter button 307 halfway (S1). When the determination is affirmative, the process proceeds to step ST20 whereas when the determination is negative, step ST19 is repeatedly performed.

In step ST20, the phase difference AF operation is performed. Specifically, in a state in which the main mirror 1031 and the sub mirror 1032 are in down positions as shown in Fig. 4, the focus lens 211 is driven in accordance with a signal output from the AF phase difference module 107.

In the camera system 1 described above, since the pieces of lens position history information, which are generated by associating history information about each of the positions of the focus lens 211 with time information about a time when the focus lens 211 passed the each of the positions, are stored in the memory 261 included in the lens controller 26 in chronological order. In addition, the AF evaluation value is calculated in accordance with the image signals successively generated in the image pickup device 101 whereby the focus time is determined. Furthermore, the position (focus position) of the focus lens 211 at the focus time is obtained with reference to the pieces of lens position history information store in chronological order. Accordingly, even though the camera body 10 does not obtain the position information of the focus lens 211 from the interchangeable lens 2 in real time, the contrast AF operation is appropriately performed.

Modification

The AF evaluation value in the embodiment described above may be obtained not only by calculating a total of absolute values of differences between adjacent pixels in the AF area, but also by calculating a total of absolute values of square values of differences between adjacent pixels in the AF area.

The AF actuator 71M according to the embodiment is not necessarily included in the interchangeable lens 2, but may be included in the camera body 10.

In the embodiment described above, the information of the focus position of the focus lens 211 which is determined using the interchangeable lens 2 is not necessarily transmitted to the main controller 62 included in the camera body 10, but an AF control signal which is generated on the basis of the focus lens 211 using the lens controller 26 may be transmitted to the focus driving controller 71A.

The focus position of the focus lens 211 according to the embodiment is not necessarily determined by calculation of the difference time Ts, but may be determined using a time difference between a time obtained using the timer 263 included in the lens controller 26 and at time obtained using the timer 621 included in the main controller 62 when the contrast AF operation is performed or when the interchangeable lens 2 is attached to the camera body 10. Specifically, when the contrast AF is performed, the main controller 62 obtains a time difference $\alpha$ between a time obtained using the timer 263 included in the lens controller 26 and a time obtained using the timer 621 included in the main controller 62, and information of a time which is obtained by subtracting the time difference $\alpha$ from the focus time Tp (step S13 in Fig. 9) determined in the camera body 10 and by being corrected so as to be used in the interchangeable lens 2, that is, information of a time compatible with the timer 263 of the interchangeable lens 2 is transmitted to the interchangeable lens 2. By this, the position of the focus lens 211 at focus time is determined using the timer 263 included in the interchangeable lens 2.

It should be understood by those skilled in the art that various modifications, combinations, sub-combinations and alterations may occur depending on design requirements and other factors insofar as they are within the scope of the appended claims or the equivalents thereof.

**Claims**

1. An image pickup system including:

an interchangeable lens having a focus lens driven using predetermined lens driving means; and
an image pickup apparatus on which the interchangeable lens is mounted,

wherein
the image pickup apparatus includes,
image pickup means for generating image signals on the basis of a light image of a subject which has passed through the interchangeable lens,
focus information obtaining means for obtaining pieces of focus detection information generated on the basis of the image signals successively generated using the image pickup means when a focus detection operation using a contrast detection system is performed, and
focus time determining means for determining a focus time when the focus lens has passed a focus position on the basis of the pieces of focus detection information obtained in accordance with the image signals using the focus information obtaining means and pieces of time information about time points when the image signals are generated using the image pickup means, and
the interchangeable lens includes,
lens position detecting means for successively detecting positions of the focus lens driven using the predetermined lens driving means when the focus detection operation using a contrast detection system is performed,
storing means for storing pieces of lens position history information in chronological order generated by associating pieces of history information about the positions of the focus lens detected using the lens position detecting means with pieces of time information about time points when the focus lens has passed the positions, and
focus position determining means for determining a position of the focus lens at the focus time as the focus position on the basis of the pieces of lens position history information stored in chronological order in the storing means.

2. The image pickup system according to Claim 1,
wherein the image pickup apparatus further includes,
calculating means for calculating a difference time between the focus time determined using the focus time determining means and a current time, and
the focus position determining means determines a position of the focus lens at a time point going back from the current time by a period of time corresponding to the difference time on the basis of the pieces of lens position history information obtained in chronological order.

3. The image pickup system according to Claim 1 or 2,
wherein a signals is supplied from the image pickup apparatus to the interchangeable lens with a predetermined transmission time, and
the focus position determining means determines a position of the focus lens at a time point going back from the current time by a period of time obtained by adding the predetermined transmission time to the difference time on the basis of the pieces of lens position history information obtained in chronological order.

4. The image pickup system according to Claim 1, 2 or 3,
wherein the focus information obtaining means obtains the pieces of focus detection information on the basis of the image signals successively generated in a predetermined cycle using the image pickup means, and
the lens position detecting means successively detects the positions of the focus lens in a cycle corresponding to the predetermined cycle.

5. An image pickup apparatus to which an interchangeable lens having a focus lens driven using predetermine lens driving means is attachable, the image pickup apparatus comprising:

image pickup means for generating image signals on the basis of a light image of a subject which has passed through the interchangeable lens,
focus information obtaining means for obtaining pieces of focus detection information generated on the basis of the image signals successively generated using the image pickup means when a focus detection operation using a contrast detection system is performed, and
focus time determining means for determining a focus time when the focus lens has passed a focus position on the basis of the pieces of focus detection information obtained in accordance with the image signals using the focus information obtaining means and pieces of time information about time points when the image signals are generated using the image pickup means,

wherein the interchangeable lens includes,

lens position detecting means for successively detecting positions of the focus lens driven using the predetermined lens driving means when the focus detection operation using a contrast detection system is performed,
storing means for storing pieces of lens position history information in chronological order generated by associating pieces of history information about the positions of the focus lens detected using the lens position detecting means with pieces of time information about time points when the focus lens has passed the positions, and
focus position determining means for determining a position of the focus lens at the focus time as the focus position on the basis of the pieces of lens position history information stored in chronological order in the storing means.

6. An interchangeable lens which has a focus lens driven using predetermine lens driving means and which is attachable to an image pickup apparatus, the interchangeable lens comprising:

lens position detecting means for successively detecting positions of the focus lens driven using the predetermined lens driving means when a focus detection operation using a contrast detection system is performed,
storing means for storing pieces of lens position history information in chronological order generated by associating pieces of history information about the positions of the focus lens detected using the lens position detecting means with pieces of time information about time points when the focus lens has passed the positions, and
focus position determining means for determining a position of the focus lens at the focus time as the focus position on the basis of the pieces of lens position history information stored in chronological order in the storing means,

wherein the image pickup apparatus includes,
image pickup means for generating image signals on the basis of a light image of a subject which has passed through the interchangeable lens,
focus information obtaining means for obtaining pieces of focus detection information generated on the basis of the image signals successively generated using the image pickup means when the focus detection operation using a contrast detection system is performed, and
focus time determining means for determining a focus time when the focus lens has passed a focus position on the basis of the pieces of focus detection information obtained in accordance with the image signals using the focus information obtaining means and pieces of time information about time points when the image signals are generated using the image pickup means.

7. An image pickup system including:

an interchangeable lens having a focus lens driven using a predetermined lens driving unit; and
an image pickup apparatus on which the interchangeable lens is mounted,

wherein
the image pickup apparatus includes,
an image pickup unit configured to generate image signals on the basis of a light image of a subject which has passed through the interchangeable lens,
a focus information obtaining unit configured to obtain pieces of focus detection information generated on the basis of the image signals successively generated using the image pickup unit when a focus detection operation using a contrast detection system is performed, and
a focus time determining unit configured to determine a focus time when the focus lens has passed a focus position on the basis of the pieces of focus detection information obtained in accordance with the image signals using the focus information obtaining unit and pieces of time information about time points when the image signals are generated using the image pickup unit, and
the interchangeable lens includes,
a lens position detector configured to successively detect positions of the focus lens driven using the predetermined lens driving unit when the focus detection operation using a contrast detection system is performed,
a storing unit configured to store pieces of lens position history information in chronological order generated by associating pieces of history information about the positions of the focus lens detected using the lens position detector with pieces of time information about time points when the focus lens has passed the positions, and

a focus position determining unit configured to determine a position of the focus lens at the focus time as the focus position on the basis of the pieces of lens position history information stored in chronological order in the storing unit.

8. An image pickup apparatus to which an interchangeable lens having a focus lens driven using a predetermine lens driving unit is attachable, the image pickup apparatus comprising:

an image pickup unit configured to generate image signals on the basis of a light image of a subject which has passed through the interchangeable lens;
a focus information obtaining unit configured to obtain pieces of focus detection information generated on the basis of the image signals successively generated using the image pickup unit when a focus detection operation using a contrast detection system is performed; and
a focus time determining unit configured to determine a focus time when the focus lens has passed a focus position on the basis of the pieces of focus detection information obtained in accordance with the image signals using the focus information obtaining unit and pieces of time information about time points when the image signals are generated using the image pickup unit,

wherein the interchangeable lens includes,
a lens position detector configured to successively detect positions of the focus lens driven using the predetermined lens driving unit when the focus detection operation using a contrast detection system is performed,
a storing unit configured to store pieces of lens position history information in chronological order generated by associating pieces of history information about the positions of the focus lens detected using the lens position detector with pieces of time information about time points when the focus lens has passed the positions, and
a focus position determining unit configured to determine a position of the focus lens at the focus time as the focus position on the basis of the pieces of lens position history information stored in chronological order in the storing unit.

9. An interchangeable lens which has a focus lens driven using a predetermine lens driving unit and which is attachable to an image pickup apparatus, the interchangeable lens comprising:

a lens position detector configured to successively detect positions of the focus lens driven using the predetermined lens driving unit when a focus detection operation using a contrast detection system is performed;
a storing unit configured to store pieces of lens position history information in chronological order generated by associating pieces of history information about the positions of the focus lens detected using the lens position detector with pieces of time information about time points when the focus lens has passed the positions; and
a focus position determining unit configured to determine a position of the focus lens at the focus time as the focus position on the basis of the pieces of lens position history information stored in chronological order in the storing unit,

wherein the image pickup apparatus includes,
an image pickup unit configured to generate image signals on the basis of a light image of a subject which has passed through the interchangeable lens,
a focus information obtaining unit configured to obtain pieces of focus detection information generated on the basis of the image signals successively generated using the image pickup unit when the focus detection operation using a contrast detection system is performed, and
a focus time determining unit configured to determine a focus time when the focus lens has passed a focus position on the basis of the pieces of focus detection information obtained in accordance with the image signals using the focus information obtaining unit and pieces of time information about time points when the image signals are generated using the image pickup unit.

# FIG. 1

# FIG. 2

# FIG. 3

# FIG. 4

FIG. 5

## FIG. 6

## FIG. 7

| ADDRESS | TIME DATA | POSITION DATA |
|---------|-----------|---------------|
| $A_0$ | $T_0$ | $P_0$ |
| $A_1$ | $T_1$ | $P_1$ |
| $A_2$ | $T_2$ | $P_2$ |
| ⋮ | ⋮ | ⋮ |
| $A_m$ | $T_m$ | $P_m$ |

# FIG. 8

## FIG. 9

```
                    START

            LIVE VIEW MODE SET? ─── ST1
                    │ YES        NO
                    ▼
            MOVE MIRRORS UPWARD ─── ST2
                    │
                    ▼
    ACTIVATE IMAGE PICKUP ELEMENT (60 fps) ─── ST3
                    │
                    ▼
            LIVE VIEW DISPLAY ─── ST4
                    │
                    ▼
    NO ─ SHUTTER BUTTON PRESSED HALFWAY? ─── ST5
                    │ YES
                    ▼
        CHANGE PIXEL READING CYCLE OF
        IMAGE PICKUP ELEMENT TO 240 fps ─── ST6
                    │
                    ▼
    START OBTAINING AF EVALUATION VALUE ─── ST7
                    │
                    ▼
            DETECT FOCUS DIRECTION
        BY SLIGHTLY DRIVING FOCUS LENS ─── ST8
                    │
                    ▼
        OBTAIN AF EVALUATION VALUE ─── ST9
                    │
                    ▼
        OBTAIN EXPOSURE CENTER TIME ─── ST10
                    │
                    ▼
        PERFORM CONTRAST AF OPERATION ─── ST11
                    │
                    ▼
            AF EVALUATION VALUE
    NO ─ PASSED PEAK VALUE? ─── ST12
                    │ YES
                    ▼
        DETERMINE PEAK TIM Tp OF
        AF EVALUATION VALUE ─── ST13
                    │
                    ▼
        OBTAIN CURRENT TIME Tq ─── ST14
                    │
                    ▼
    CALCULATE DIFFERENCE TIME Ts (= Tq - Tp) ─── ST15
                    │
                    ▼
    REQUIRE POSITION INFORMATION OF FOCUS LENS BEFORE
    DIFFERENCE TIME Ts OF INTERCHANGEABLE LENS ─── ST16
                    │
                    ▼
    TRANSMIT POSITION INFORMATION OF FOCUS LENS BEFORE
    DIFFERENCE TIME Ts FROM INTERCHANGEABLE LENS ─── ST17
                    │
                    ▼
        DRIVE FOCUS LENS TO MOVE TO
    POSITION BEFORE DIFFERENCE TIME Ts ─── ST18
                    │
                    ▼
                    END


        SHUTTER BUTTON
        PRESSED HALFWAY? ─── ST19
            │ YES      NO
            ▼
        PHASE DIFFERENCE AF ─── ST20
```

**EP 1 947 841 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007007074 A

- JP 2003295047 A